# EUROPÄISCHE PATENTSCHRIFT

(11) **EP 2 126 480 B1**
(45) Veröffentlichungstag und Bekanntmachung des Hinweises auf die Patenterteilung: **12.01.2011**
(21) Anmeldenummer: 08717946.1
(22) Anmeldetag: 18.03.2008
(51) Int. Cl.: F24J 2/22

(54) **ABSORBER FÜR SOLARTHERMIE UND VERFAHREN ZUR HERSTELLUNG EINES ABSORBERS**
ABSORBER FOR SOLAR HEATING AND METHOD FOR PRODUCING AN ABSORBER
ABSORBEUR POUR L'HÉLIOTHERMIE ET PROCÉDÉ DE FABRICATION D'UN ABSORBEUR

(30) Priorität: 20.03.2007 DE 102007013919
(43) Veröffentlichungstag der Anmeldung: 02.12.2009
(60) Teilanmeldung: 10189714.8
(73) Patentinhaber: ETA 86 Solar Steel AG, 6340 Baar (CH)
(72) Erfinder: ETA 86 Solar Steel AG, 6340 Baar (CH)
(74) Vertreter: Gröschel, Andreas
(86) Internationale Anmeldenummer: PCT/EP2008/053213
(87) Internationale Veröffentlichungsnummer: WO 2008/113800

(56) Entgegenhaltungen:
- WO-A-01/14080
- WO-A-01/69689
- WO-A-99/24772
- WO-A-2004/074749
- CH-A5- 588 668
- DE-A1- 4 127 130
- JP-A- 57 056 181
- US-A- 3 995 615
- US-A- 4 086 910
- US-A- 4 089 324
- US-A- 4 161 809
- US-A- 4 243 020

## Beschreibung

Die Erfindung betrifft einen Absorber, mit dem durch Solarthermie Wärme gewonnen werden kann, beispielsweise um ein Gebäude zu heizen oder zu kühlen. Die Erfindung betrifft ferner ein Verfahren zur Herstellung eines derartigen Absorbers.

Bei einem bekannten Absorber, der zur Wärmegewinnung aus Solarthermie verwendet wird, ist ein Kupferblech vorgesehen, auf das Kupferrohre aufgelötet oder geschweißt sind. Die aufgelöteten Kupferrohre sind an der einen Seite mit einem Zuleitungsrohr und auf der anderen Seite mit einem Abteilungsrohr verbunden. Über das Zuleitungsrohr wird Wasser durch die Kupferrohre geleitet, das über die Wärmestrahlung der Sonne in den Kupferrohren aufgeheizt wird und über das Abteilungsrohr beispielsweise zum Heizen weiterverwendet werden kann.

Nachteilig bei einem derartigen Absorber ist der hohe Herstellungsaufwand. Das Verlöten der Kupferrohre mit dem Kupferblech ist zeitaufwendig und nicht immer mit einer konstanten Qualität möglich. Ferner ist es erforderlich, bei dem Zuleitungsrohr und dem Ableitungsrohr durch Bearbeiten, beispielsweise Bohren, Fräsen und/oder Schweißen Anschlüsse zu realisieren, um die einzelnen Kupferrohre mit dem Zuleitungsrohr bzw. dem Ableitungsrohr zu verbinden. Zur Herstellung des Absorbers sind somit mehrere unterschiedliche Arbeitsschritte erforderlich, die mit Hilfe unterschiedlicher Maschinen und unterschiedlicher Prozesse durchgeführt werden müssen. Dies ist zeitaufwendig und personalintensiv, wodurch sich hohe Herstellungskosten ergeben.

Ein Absorber mit den Merkmalen des Oberbegri ff des Anspruchs 1 ist aus US 3 995 615 A bekannt.

Es ist die Aufgabe der Erfindung einen Absorber zu schaffen, der einfacher herzustellen ist, sowie ein Verfahren zur einfacherer Herstellung eines derartigen Absorbers.

Die Aufgabe wird erfindungsgemäß durch einen Absorber mit den Merkmalen des Anspruchs 1 und ein Verfahren mit den Merkmalen des Anspruchs 8 gelöst. Vorteilhafte Ausgestaltungen der Erfindung sind in den Unteransprüchen angegeben.

Der erfindungsgemäße Absorber zur Wärme- und/oder Energiegewinnung aus Solarthermie weist ein Oberblech auf, das im Betriebszustand des Absorbers der Sonne zugewandt ist, sowie ein Unterblech, das im Betriebszustand des Wärmestauschers von der Sonne abgewandt ist. Zwischen dem Oberblech und dem Unterblech sind Leitmittel, beispielsweise Kanäle oder Strömungsleitbleche, ausgebildet, durch die ein Fluid von einem Einlass zu einem Auslass im Wesentlichen linear und/oder homogen hindurch geleitet werden kann. Der Einlass und/oder der Auslass sind durch das Unterblech ausgebildet. Der Einlass und/oder der Auslass und/oder die Leitmittel sind durch Tiefziehen herstellbar. Bei dem erfindungsgemäßen Absorber sind die Leitmittel einstückig mit dem Unterblech ausgebildet und das Oberblech liegt an den Leitmitteln an, wobei das Oberblech als gerade Platte ausgestaltet ist, um den Herstellungsaufwand gering zu halten. Insbesondere kann das Blech mit den ausgeformten Leitmitteln derart gestaltet sein, dass sich sämtliche Kontaktflächen in einer gemeinsamen Ebene befinden. Dadurch, dass das jeweils andere Blech an den ausgeformten Leitmitteln anliegt, können äußere Kräfte, beispielsweise das Eigengewicht des Oberblechs, und innere Kräfte, beispielsweise der Druck des Fluids im Absorber, besser aufgenommen und abgeleitet werden. Dies ermöglicht einen Absorber mit einer großen Oberfläche, ohne dass Probleme bezüglich der Statik auftreten.

Es ist somit möglich den Absorber mit Hilfe von sehr wenigen Bauteilen herzustellen. Die einzelnen Bauteile Oberblech und Unterblech und ein in einer Ausführungsform, die nicht Teil der Erfindung ist, gegebenenfalls vorgesehenes Zwischenblech zur Ausbildung der Leitmittel können durch vergleichbare Verfahren hergestellt werden, so dass besonders einfach Großserien der einzelnen Bauteile im industriellen Meßstab einfach und kostengünstig hergestellt werden können. Beispielsweise ist es möglich, das Oberblech, das Unterblech sowie das Zwischenblech aus einem Metallband, insbesondere ein und demselben Metallband herzustellen, indem die einzelnen Bleche durch Umformtechniken wie beispielsweise Tiefziehen, Kaltumformen, Warmumformen und dergleichen in ihre benötigte Form gebracht werden. Durch die beispielsweise beim Tiefziehen entstehenden Gefügeveränderungen in dem Blech wird die Festigkeit und Stabilität sogar bei abnehmender Blechstärke erhöht, so dass durch geringen Materialeinsatz ein langlebiges und haltbares Produkt entsteht. Je nach Anwendungsfall können auch anwendungsorientiert verschiedene Metallbänder verwendet werden. Dadurch ist es möglich nutzungsorientiert verschiedene Werkstoffe. Blechdicken, Beschichtungen und Formen miteinander zu kombinieren, indem entsprechende unterschiedliche Metallbänder verwendet werden. Diese Fertigung kann insbesondere kontinuierlich und im industriellen Maßstab erfolgen. Ferner sind verhältnismäßig wenige Maschinen erforderlich, um den erfindungsgemäßen Absorber herzustellen. Die Herstellung des Absorbers kommt mit vergleichsweise preiswerten Werkstoffen und Zusatzstoffen aus. Die Herstellung ist somit vereinfacht und nicht zuletzt aufgrund der geringeren Personalkosten, der besonders hohen Taktzeiten bei der Produktion und der preiswerten eingesetzten Materialien kostengünstiger. Durch eine geeignete Auswahl an Materialien und deren Verbindung kann die Leistungsfähigkeit des Absorbers bezogen auf die Energieaufnahme und Energieabgabe optimiert werden. Insbesondere weist der Absorber nur genau einen Einlass und nur genau einen Auslass auf.

In einer vorteilhaften Ausgestaltung der Erfindung sind der Einlass und/oder der Auslass einfache Ausstülpungen, so dass sich eine einfache Geometrie ergibt, die durch Tiefziehen leicht herstellbar ist. Die Ausstülpungen können zylindrisch oder leicht konisch mit einer Steigung von ca. 1,5% bis 3,0% ausgestaltet sein und gegebenenfalls eine Hinterschneidung aufweisen, so dass es besonders einfach ist mit Hilfe einer Muffe einen Schlauch anzuschließen. Die Ausstülpungen sind insbesondere besonders kurz ausgestaltet und weisen beispielsweise eine Länge auf, die gerade ausreichend ist eine Muffe anzuschließen, so dass auch bei besonders geringen Blechdicken die Ausstülpungen durch Tiefziehen hergestellt werden können und ein Anschweißen des Einlasses und des Auslasses an das Oberblech und/oder Unterblech vermieden werden kann.

Ferner ist es möglich durch computerunterstützte Berechnungen beispielsweise durch FEM für den Absorber die ideale Strömung und Energieaufnahme z. B. auf Basis der Werkstoffe, Form und/oder Beschichtung zu berechnen. Entsprechend kann die ideale Energieableitung z. B. auf Basis für den jeweiligen Anwendungsfall optimierter Strömungsverhältnisse im Absorber bereits im Vorfeld vollständig bestimmt werden, wodurch der Aufbau und die Geometrie des Absorbers bereits in der Planungs- und Konstruktionsphase ideal optimiert werden kann, um eine optimale Energieabsorption sowie Energieableitung durch optimale Strömungen im Absorber zu erreichen. Technische Randbedingungen können bereits sehr früh berücksichtigt und derart umgesetzt werden, dass sich für jeden individuellen Einzelfall eine maßgeschneiderte optimierte Lösung ergibt.

Aufgrund des verhältnismäßig einfachen Aufbaus des Absorbers und bei Verwendung entsprechend korrosionsbeständiger Bauteile ist der Absorber über seine Lebensdauer nahezu revisionsfrei, da Reparaturen von Verschleißteilen nicht erforderlich sind. Der Absorber ist somit besonders dafür geeignet Privatgebäude zu heizen und/oder zu kühlen, da insbesondere Wartungstätigkeiten, sofern überhaupt erforderlich, im Bedarfsfall einfach von einem externen Anbieter eingeholt werden können und eigene Spezialkenntnisse für den Betrieb nicht erforderlich sind.

Insbesondere ist es möglich, Kupfer oder Kupferlegierungen als Material zur Herstellung des Absorbers zu vermeiden. Der Absorber kann vorzugsweise aus einem Stahl oder einem nicht Eisenmetall, ausgenommen Kupfer oder Kupferlegierungen, hergestellt sein. Es ist somit möglich, ein besonders kostengünstiges Material auszuwählen oder ein Material zu verwenden, das sich besonders einfach durch die vorgesehen Umformverfahren in den gewünschten Zustand bringen lässt.

In einer Ausführungsform, die nicht Teil der Erfindung ist, können die Leitmittel beispielsweise durch ein geformtes Zwischenblech ausgebildet werden, das insbesondere durch Umformen geformt wurde. Das geformte Zwischenblech ist beispielsweise als Wellblech oder Trapezblech ausgebildet. Die Leitmittel können aber auch dadurch ausgebildet sein, dass das Oberblech und/oder das Unterblech insbesondere durch Umformen derart geformt sind, dass sich zwischen dem Oberblech und dem Unterblech die Leitmittel beispielsweise als Kanäle ausbilden. Die Leitmittel können hierzu insbesondere durch Tiefziehen des Oberblechs und/oder des Unterblechs ausgebildet sein.

In einer vorteilhaften Ausgestaltung der Erfindung sind mehrere Leitmittel vorgesehen, die in Strömungsrichtung und/oder quer zur Strömungsrichtung zueinander beabstandet angeordnet sind. Hierbei wird die Erkenntnis ausgenutzt, dass das Fluid eine so geringe Strömungsgeschwindigkeit aufweist, dass mehrere vereinzelt angeordnete Leitmittel ausreichen, um eine lineare Strömung von der Einlassseite zur Auslassseite zu gewährleisten, die insbesondere laminar ist. Insbesondere sind die Leitmittel in Strömungsrichtung strömungstechnisch konturiert, indem die Leitmittel beispielsweise einen keilförmigen oder tropfenförmigen Querschnitt aufweisen. Vorzugsweise weisen die Leitelemente eine Länge in Strömungsrichtung auf, die größer ist als eine Breite quer zur Strömungsrichtung. Die Leitmittel können dadurch eine im Wesentlichen linear strömende Fluidströmung gewährleisten und gleichzeitig einen besonders geringen Strömungswiderstand bieten.

Bei dem erfindungsgemäßen Absorber weist das Unterblech ein dem Einlass zugeordnetes Einlaufbassin zur Ausbildung eines Einströmbereichs auf. Ferner weist das Unterblech ein dem Auslass zugeordnetes Auslaufbassin zur Ausbildung eines Ausströmbereichs auf. Das Einlaufbassin und das Auslaufbassin sind über einen Leitungsboden, der gegebenenfalls die aus der Ebene des Unterblechs hervorragenden Leitmittel ausbildet, verbunden. Der Leitungsboden weist hierbei einen geringeren Abstand zum Oberblech aufweist als ein Einlaufbassinboden des Einlaufbassins und ein Auslaufbassinboden des Auslaufbassins. In dem Einströmbereich kann sich die Strömung des Fluids, das über den Einlass in das Einlaufbassin geleitet wurde, aufgrund der deutlich abfallenden Strömungsgeschwindigkeit zunächst etwas vergleichsmäßigen, wodurch turbulente oder ungleichförmige Strömungen im Bereich des Leitungsbodens vermieden sind oder zumindest der Turbulenzgrad reduziert ist. Entsprechend werden im Ausströmbereich die an den Leitelementen vorbeiströmenden Strömungen zunächst zusammengeführt bevor das Fluid über den Auslass den Absorber verlässt. Dadurch werden auch im Ausströmbereich und im Bereich des Leitungsbodens turbulente Strömungen vermieden oder zumindest reduziert.

Insbesondere ist es möglich die Vergleichmäßigung der Strömung nur durch die Bassins zu gewährleisten, so dass eine lineare, insbesondere laminare, und homogene Strömung im Bereich des Leitungsbodens ohne weitere Hilfsmittel erreicht werden kann. In diesem Fall kann die strömungstechnische Wirkung der im Bereich des Leitungsbodens ausgebildeten Leitmittel im Wesentlichen unterstützend sein, so dass den Leitmitteln eher eine stabilisierende Wirkung für den konstruktiven Aufbau des Absorbers zukommt. Bei ausreichender Stabilität des Absorbers im Übrigen können die im Bereich des Leitungsbodens angeordneten Leitmittel sogar weggelassen werden. Die durch die Bassins erreichte lineare und/oder homogene Strömung kann in diesem Fall im Bereich des Leitungsbodens zwischen geraden Flächen des Unterblechs und des Oberblechs bereit gestellt werden, um Wärme aufzunehmen und/oder abzugeben. Die Leitmittel zur im Wesentlichen linearen und/oder homogenen Durchleitung des Fluids von dem Einlass zu dem Auslass werden in diesem Fall ausschließlich durch das Einlaufbassin und/oder das Auslaufbassin ausgebildet.

Das Einlaufbassin im Einströmbereich und das Auslaufbassin im Ausströmbereich sind insbesondere in Abhängigkeit vom zu erwartenden Volumenstrom des Fluids dimensioniert. Da sich somit innerhalb des Absorbers eine weitgehend gleichmäßige, insbesondere laminare und homogene Strömung ergibt, wird ein Wärmetransport in der Strömungsrichtung optimiert bzw. entgegen der Strömungsrichtung zumindest reduziert, so dass mit dem erfindungsgemäßen Absorber eine besonders hohe Temperaturdifferenz des Fluids zwischen dem Einlass und dem Auslass erreicht werden kann, wodurch der Wirkungsrad des Absorbers verbessert ist. Insbesondere ergibt sich eine homogene Temperaturverteilung in Strömungsrichtung, die insbesondere laminar ist. Ferner kann insbesondere bei der Herstellung durch Tiefziehen der Strömungsquerschnitt im Einströmbereich größer als der Strömungsquerschnitt im Ausströmbereich vorgesehen werden, so dass sich vom Einlass zum Auslass eine Änderung der Strömungsgeschwindigkeit realisieren lässt, beispielsweise um für einen besonders hohen Wirkungsgrad die Energieaufnahme bzw. Energieabfuhr zu optimieren. Der Einströmbereich und/oder der Ausströmbereich können dadurch eine Speicherfunktion wahrnehmen und einen Teil des Fluids zeitweise im Einströmbereich und/oder im Ausströmbereich speichern.

Bei dem erfindungsgemäßen Absorber beträgt der Abstand des Leitungsbodens zum Oberblech insbesondere ≥ 1,5 mm bis ≤ 6,0 mm, vorzugsweise ≥ 2,0 mm bis ≤ 4,0 mm und besonders bevorzugt ≥ 2,5 mm bis ≤ 3,5 mm. Die durchschnittliche Strömungsgeschwindigkeit des Fluids, insbesondere Wasser, beträgt im Bereich des Leitungsbodens insbesondere ≥ 0,001 m/s bis ≤ 0,02 m/s, vorzugsweise ≥ 0,002 m/s bis ≤ 0,005 m/s und besonders bevorzugt ≥ 0,0025 m/s bis ≤ 0,0035 m/s. Dadurch kann eine hohe Wärmeaufnahme erreicht werden, während gleichzeitig ein besonders geringer Druckverlust erreicht wird.

In einer vorteilhaften Ausgestaltung der Erfindung sind das Oberblech und das Unterblech beispielsweise durch Kleben oder Laserschweißen miteinander verbunden. Vorzugsweise weisen das Oberblech und das Unterblech hierzu jeweils einen zumindest teilweise umlaufenden Ansatz bzw. Flansch auf, so dass das Oberblech und das Unterblech über den Ansatz/Flansch miteinander verbunden werden können. Das gegebenenfalls vorhandene Zwischenblech kann ebenfalls mit dem Oberblech und/oder dem Unterblech beispielsweise durch Kleben oder Laserschweißen verbunden sein. Wenn für das Oberblech und das Unterblech ein insbesondere ferritischer Stahl verwendet wird, können die Hystereseverluste des Stahls genutzt werden, indem der Stahl durch Induktion erwärmt wird, um den verwendeten Kleber schnell aushärten zu lassen, wodurch die Produktionsgeschwindigkeit steigt und ein Auslagern des Absorbers zum Aushärten des Klebers, sofern überhaupt, zumindest reduziert werden kann. Es ist jedoch auch möglich, das Zwischenblech durch die Verbindung des Oberblechs mit dem Unterblech zwischen dem Oberblech und dem Unterblech bewegungsfest festzuklemmen, so dass eine gesonderte Verbindung des Zwischenblechs mit dem Oberblech und/oder dem Unterblech nicht erforderlich ist.

Bei dem erfindungsgemäßen Absorber ist eine formschlüssige Verbindung zwischen Oberblech und Unterblech vorgesehen, wobei die Verbindung über eine hinterschnittene Rippe, die in einer sich im Öffnungsbereich verjüngenden Vertiefung eingesetzt ist, erfolgt und die Vertiefung durch entsprechend der hinterschnittenen Rippe geformte Rippen ausgebildet ist.

Vorzugsweise ist der Absorber in Betrieb im Bereich des umlaufenden Ansatzes/Flansches mit einem Träger befestigt. Besonders bevorzugt weist der Absorber eine Befestigungsvorrichtung auf, in der eine Haltenut vorgesehen ist. In die Haltenut kann der umlaufendene Ansatz eingesetzt sein, so dass der Absorber sicher in der Befestigungsvorrichtung gehalten ist. Eine zumindest teilweise Zerstörung der Oberfläche der für den Absorber verwendeten Bleche, beispielsweise um durch Lochen Durchgangsbohrungen für Befestigungsschrauben vorzusehen, wird dadurch vermieden. Die Befestigungsvorrichtung kann insbesondere den Absorber vorzugsweise im Bereich des umlaufenden Ansatzes rahmenförmig umgreifen und gegenüber dem Gebäude isolieren. Besonders bevorzugt weist die Befestigungsvorrichtung eine Oberseite auf, die mit dem Oberblech fluchtet. Dadurch, dass die Oberseite der Befestigungsvorrichtung mit dem Oberblech fluchtet, ergibt sich ein im Wesentlichen absatzloser Gesamteindruck für den Absorber. Dieses im Wesentlichen ebene Design ermöglicht es, den Absorber in einer optisch ansprechenden Art und Weise an einem Gebäude anzubringen. Beispielsweise kann der Absorber auf einem Dach eines Gebäudes montiert werden, ohne dass das Aussehen des Gebäudes wesentlich beeinträchtigt wird. Die Befestigungsvorrichtung ermöglicht dabei gleichzeitig eine isolierte Montage auf dem Bauwerk. Vorzugsweise ist der Absorber mit der Befestigungsvorrichtung auf einer Höhe montiert, dass sich zwischen dem Unterblech und dem Untergrund ein Spalt ergibt, der groß genug ist mit den Einlass und/oder mit dem Auslass verbundene Zuleitungen aufzunehmen. Die Zuleitungsrohre sind dadurch von außen nicht einsehbar, so dass der optische Gesamteindruck nicht beeinträchtigt ist. Ferner sind die Zuleitungen beispielsweise vor Regenwasser geschützt.

In einer vorteilhaften Ausgestaltung der Erfindung ist in dem Unterblech und/oder in dem Oberblech einen Sichtbereich vorgesehen, der vorzugsweise im Wesentlichen transparent ausgerührt ist. Hierzu wird beispielsweise durch Stanzen eine Ausnehmung in dem Oberblech und/oder in dem Unterblech vorgesehen, wobei vorzugweise sowohl das Oberblech als auch das Unterblech die Ausnehmung aufweisen und die Ausnehmungen im Wesentlichen übereinander angeordnet sind, um ein Fenster bereitzustellen, das eine Sicht durch den Absorber hindurch ermöglicht. Die Ausnehmungen werden durch ein geeignetes Material, beispielsweise Acrylglas und/oder Quarzglas, geschlossen sein. Durch den Sichtbereich ist es möglich den Zustand des Absorbers im Innern zu kontrollieren. Ferner kann ein Sichtfenster ausgebildet werden, so dass der Absorber auch im Bereich eines Gebäudefensters angeordnet werden kann, ohne die Sicht aus dem Gebäude heraus signifikant zu beeinträchtigen. Es ist auch möglich in dem Sichtbereich ein Photovoltaikelement zur Erzeugung von elektrischer Energie aus Sonnenlicht, beispielsweise eine Solarzelle, vorzusehen. Dies ermöglicht es durch den Absorber sowohl Wärme als auch elektrische Energie bereitzustellen ohne hierbei CO₂ zu produzieren.

In einer weiteren Ausführungsform ist das Oberblech zumindest teilweise mit einer Absorptionsschicht zur Absorption von Sonnenstrahlung beschichtet. Bei der Absorptionsschicht kann es sich beispielsweise um einen speziellen Absorptionslack mit einem besonders hohem Absorptionsvermögen für Sonnenlicht oder auch um einen Lack in einer dunklen Farbe beispielsweise Schwarz handeln. Durch die verbesserte Absorption der Sonnenstrahlung kann die Erwärmung des durch den Absorber hindurch geleiteten Fluids verbessert werden, wodurch der Wirkungsgrad verbessert ist. Zusätzlich oder alternativ können das Obcrblech, das Unterblech und/oder das Zwischenblech auf der Oberseite und/oder der Unterseite mit einer Beschichtung versehen sein, die insbesondere einen Korrosionsschutz bereitstellt. Dadurch wird die Lebensdauer des Absorbers gewährleistet, während gleichzeitig die Wartung vereinfacht wird, da insbesondere Revisionen im Wesentlichen nicht erforderlich sind. Insbesondere wenn die einzelnen Bleche durch Kleben oder formschlüssige Verbindungen, wie beispielsweise Klipsen miteinander verbunden werden, wird eine Beschädigung der Beschichtungen vermieden, so dass ein sicherer Korrosionsschutz und gleichzeitig eine sichere Verbindung der Blechbauteile gewährleistet werden.

In einer weiteren Ausführungsform ist das Unterblech insbesondere in der Lage als tragendes Bauteil zumindest das Eigengewicht des Absorbers aufzunehmen ohne sich hierbei zu verbiegen. Hierzu weist das Unterblech eine Blechstärke von insbesondere ≥ 0,1 mm bis ≤ 2,5 mm, vorzugsweise ≥ 0,5 mm bis ≤ 2 mm, und besonders bevorzugt ≥ 0,7 mm bis ≤ 1,5 mm.

Das Oberblech des erfindungsgemäßen Absorbers kann eine besonders geringe Blechstärke aufweisen, wodurch das Gewicht des Absorbers reduziert wird und das Umformen des Oberblechs vereinfacht wird. Das Oberblech weist insbesondere eine Blechstärke von ≥ 0,05 mm bis ≤ 1,2 mm, vorzugsweise ≤ 1,0 mm bzw. ≤ 0,4 mm und besonders bevorzugt ≤ 0,2 mm auf.

Eine weitere Ausführungsform betrifft ferner ein Solarthermiesegment, mit dem ein Fluid, beispielsweise Wasser oder eine Emulsion, mit Hilfe von Sonnenstrahlung erwärmt werden kann. Das Solarthermiesegment weist eine Befestigungsvorrichtung mit mehreren Befestigungsschienen beispielsweise vergleichbar zu einer Glasfassade auf. Die Befestigungsschienen der Befestigungsvorrichtung umgreifen einen Absorber zur Wärmegewinnung aus Solarthermie im Wesentlichen rahmenförmig. Der Absorber kann wie vorstehend beschrieben aus- und weitergebildet sein. Aufgrund der im Wesentlichen rahmenförmigen Befestigungsvorrichtung können mehrere jeweils einen Absorber aufweisende Solarthermisesegmente derart, vorzugsweise nebeneinander, angeordnet werden, dass sie eine größere Fläche ergeben, die zur Erwärmung des Fluids verwendet wird. Insbesondere können mehrere Solarthermiesegmente in Reihe geschaltet werden, um eine besonders große Temperaturerhöhung des durchzuleitenden Fluids zu erreichen. Ferner können mehrere Solarthermiesegmente bzw. Ansammlungen von in Reihe geschalteten Solarthermiesegmente parallel geschaltet werden, um den Massenstrom des erwärmten Fluids zu vergrößern.

Eine weitere Ausführungsform betrifft ferner eine Solarthermieanlage, bei der mit Hilfe von Sonnenstrahlung ein Fluid erwärmt wird. Diese Solarthermieanlage weist mehrere Solarthermiesegmente auf, die wie vorstehend beschrieben aus- und weitergebildet sein können. Bei der Solarthermieanlage sind die einzelnen Solarthermiesegemente zumindest in einem Teilbereich über dieselbe Befestigungsschiene miteinander verbunden. Das heißt die Befestigungsschiene einer Befestigungsvorrichtung eines ersten Solarthermiesegments ist gleichzeitig Teil einer Befestigungsvorrichtung eines zweiten Solarthermiesegments. Dadurch ist es möglich den Flächenbedarf zur Aufnahme der einzelnen Absorber zu reduzieren, so dass besonders viel Fläche für die Absorber und besonders wenig Fläche für die Befestigungsvorrichtung vorgesehen werden kann.

Eine weitere Ausführungsform betrifft ferner ein Gebäude das mehrere Solarthermiesegemente und/oder eine Solarthermieanlage aufweist, die jeweils wie vorstehend beschrieben aus- und weitergebildet sein können. Aufgrund der stabilen Bauweise bilden die mehreren Solarthermiesegmente und/oder die Solarthemieanlage zumindest teilweise ein Dach und/oder eine Wand des Gebäudes aus. Die Solarthermiesegemnete bzw. die Solarthermieanlage sind also nicht nur beispielsweise auf Dachziegel des Daches aufgesetzt, sondern ersetzen die ansonsten erforderliche Dachziegel-Eindeckung. Die Solarthermiesegmente bzw. die Solarthermieanlage können also direkt auf die Dachunterkonstruktion, die teilweise das Tragwerk für die Solarthermiesegmente sind, aufgesetzt werden und mit dieser verbunden sein.

Die Erfindung betrifft ferner ein Verfahren zur Herstellung eines Absorbers, der insbesondere wie vorstehend beschrieben aus- und weitergebildet sein kann. Bei dem Verfahren werden eine erste Platine und eine zweite Platine bereit gestellt, die insbesondere zuvor vorzugsweise durch Stanzen aus einem gemeinsamen Flachband, das insbesondere als Coil vorliegt, erhalten wurden. Die zweite Platine wird zu einem Unterblech tiefgezogen, wobei während des Tiefziehens ein Einlass und/oder ein Auslass und/oder Leitmittel in dem Unterblech ausgebildet werden. Insbesondere werden vorzugsweise gleichzeitig ein dem Einlass zugeordnetes Einlaufbassin und ein dem Auslauf zugeordnetes Auslaufbassin durch Tiefziehen hergestellt. Gegebenenfalls werden der Einlass und/oder der Auslass und/oder sich ergebende Flanschfläche beschnitten. Das Oberblech wird mit dem Unterblech insbesondere durch Kleben und/oder Klipsen verbunden, um den Absorber auszubilden. Durch dieses Verfahren ist die Herstellung des Absorbers, der als Absorber für die Solarthemie verwendet werden kann, vereinfacht. Zur Herstellung sind lediglich Maschinen erforderlich, die beispielsweise mit dem hierfür erforderlich Know-How aus der Automobiltechnik, beispielsweise dem Karosseriebau, bekannt sind. Insbesondere ist es möglich das Oberblech und das Unterblech jeweils maximal ein einziges Mal einem Umformverfahren auszusetzen. Sämtliche Tiefziehvorgänge können in einem einzigen Schritt durchgeführt werden, wobei insbesondere weitere Umformschritte nicht erfolgen.

Nachfolgend wird die Erfindung unter Bezugnahme auf die anliegenden Zeichnungen anhand bevorzugter Ausführungsbeispiele näher erläutert. Es zeigen:

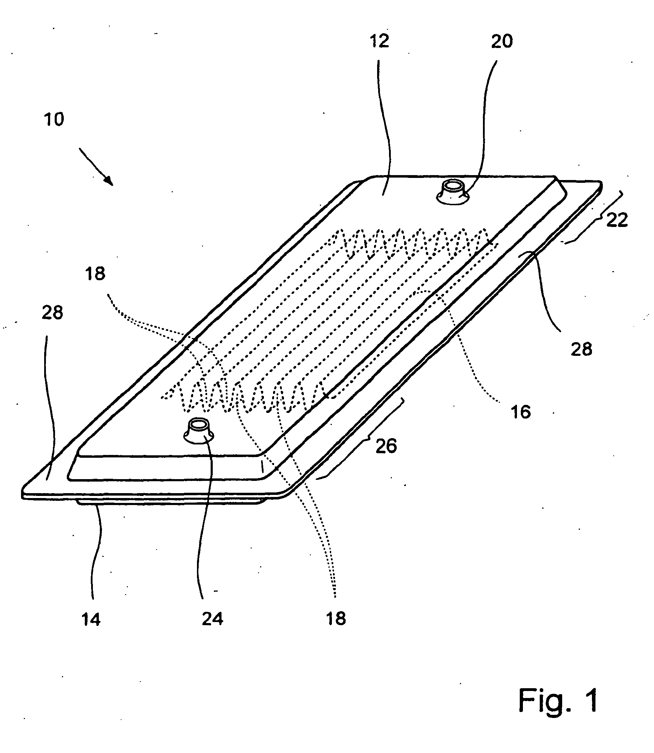

- Fig. 1: eine schematische Perspektive Ansicht eines erfindungsgemäßen Absorbers,
- Fig. 2: eine schematische Seitenansicht einer Verbindungsstelle des erfindungsgemäßen Absorbers,
- Fig. 3: eine schematische Schnittansicht einer Solarthermieanlage, die erfindungsgemäße Absorber aufweist
- Fig. 4: eine schematische perspektivische Ansicht eines Unterblechs für den erfindungsgemäßen Absorber und
- Fig. 5: eine schematische Draufsicht des Unterblechs aus Fig. 4 mit Strömungslinien.

Der erfindungsgemäße Absorber 10 weist ein im Betriebszustand der Sonne zugewandtes Oberblech 12 und ein zur Sonne abgewandtes Unterblech 14 auf. Zwischen dem Oberblech 12 und dem Unterblech 14 ist im dargstellten Ausführungsbeispiel, das nicht Teil der Erfindung ist, ein als Wellblech ausgestaltetes Zwischenblech 16 angeordnet. Durch das Zwischenblech 16 sind zwischen dem Oberblech 12 und dem Zwischenblech 16 einerseits und zwischen dem Unterblech 14 und dem Zwischenblech 16 anderseits jeweils als Leitmittel mehrere Kanäle 18 ausgebildet.

Das Zwischenblech 16 verläuft nicht vollständig über die gesamte Länge des Oberblech 12 bzw. des Unterblechs 14. Das Zwischenblech 16 ist etwas kürzer ausgestaltet, so dass sich Bereiche ausbilden, in denen keine Kanäle 18 ausgebildet sind. In dem einen Bereich ist ein Einlass 20 angeordnet, so dass sich ein Einströmbereich 22 ausbildet, in dem sich die Strömung des eingeleiteten Fluids vergleichsmäßigen kann. Entsprechend ist am gegenüberliegenden Ende des Absorbers 10 ein Auslass 24 vorgesehen, der in einem Ausströmbereich 26 angeordnet ist.

Im dargestellten Ausführungsbeispiel sind sowohl der Einlass 20 als auch der Auslass 24 durch das Oberblech 12 ausgebildet und weisen nach oben. Prinzipiell können der Einlass 20 und/oder der Auslass 24 auch durch das Unterblech 14 ausgebildet sein und nach unten weisen. Ferner ist es möglich, dass der Einlass 20 und der Auslass 24 seitlich angeordnet sind.

Der Einlass 20 und/oder der Auslass 24 sind vorzugsweise durch Tiefziehen hergestellt und sind als einfache Ausstülpungen ausgebildet. Gegebenfalls kann vor dem Tiefziehen eine Öffnung in das Oberblech bzw. das Unterblech gestanzt sein.

Im dargestellten Ausführungsbeispiel weist sowohl das Oberblech 12 als auch das Unterblech 14 einen vollständig umlaufenden Ansatz 28 auf, über die das Oberblech 12 mit dem Unterblech 14 beispielsweise durch Kleben, Löten oder Schweißen verbunden sind. Insbesondere ist es möglich bei dem Oberblech 12, dem Unterblech 14 und dem Zwischenblech 16 Kupfer oder kupferhaltige Materialien zu vermeiden und stattdessen Stahl oder ein kupferfreies Nichteisenmetall zu verwenden.

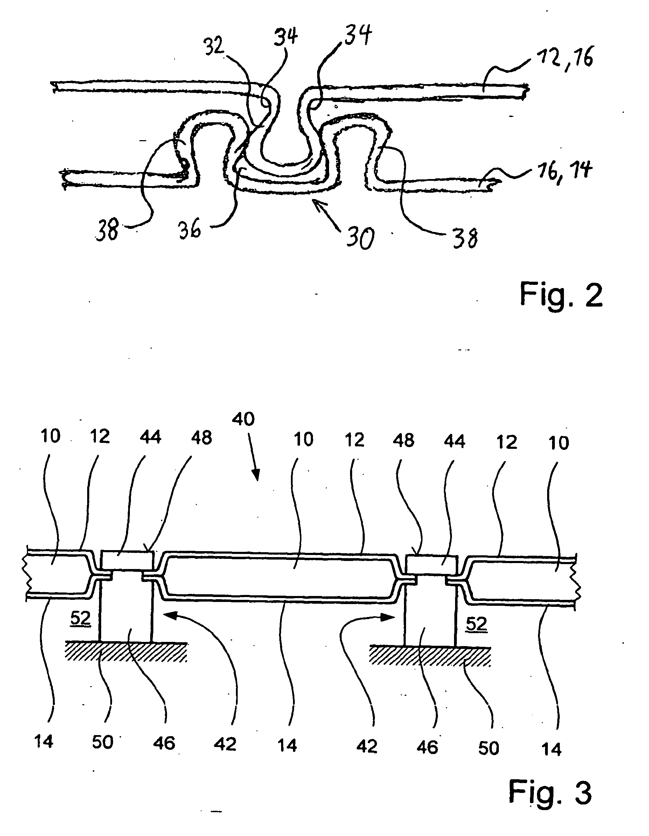

Die Verbindung des Oberblechs 12 mit dem Unterblech 14, oder in einer Ausführungsform, die nicht Teil der Erfindung ist, des Oberblechs 12 mit dem Zwischenblech 16 beziehungsweise des Zwischenblechs 16 mit dem Unterblech 14, wird durch eine formschlüssige Verbindung erfolgen (Fig. 2). Hierzu ist beispielsweise eine Klipsverbindung 30 vorgesehen. Die Klipsverbindung 30 kann das obere Blech 12, 16 eine insbesondere durch Tiefziehen hergestellte Rippe 32 aufweisen, die Hinterschneidungen 34 aufweist. Die hinterschnittene Rippe 32 greift in eine Vertiefung 36 des unteren Blechs 16, 14 ein. Die Vertiefung 36 verjüngt sich in einem der hinterschnittenen Rippe 32 zugewandten Öffnungsbereich, so dass die hinterschnittene Rippe 32 von der Vertiefung 36 sicher aufgenommen werden kann. Die Vertiefung 36 kann insbesondere durch entsprechend der hinterschnittenen Rippe 32 geformte Rippen 38 ausgebildet werden, die ebenfalls durch Tiefziehen hergestellt sein können. Durch die Verbindung 30 ergibt sich eine sichere Befestigung, die bei der Montage einfach herbei beführt werden kann.

In einer weiteren Ausführungsform können mehrere Absorber 10 zu einer größeren Solarthermieanlage 40 zusammengeschaltet werden (Fig. 3). Die Solarthermieanlage 40 weist Befestigungsschienen 42 auf, die über eine Nut den Absorber 10 im Bereich der umlaufenden Ansätze 28 aufnehmen kann. Die Befestigungsschicncn 42 weisen ein Kopfteil 44 auf, das mit einem Fußteil 46 verbunden werden kann. Das Kopfteil 44 kann ferner eine Kappe aufweisen, um die Verbindung vor Regenwasser zu schützen. Die Befestigungsschiene 42 weist im Bereich des Kopfteils 44 eine Oberseite 48 auf die mit dem Oberblech 12 fluchtet, um einen angenehmen optischen Gesamteindruck zu erzeugen. Die Haltenut der Befestigungsvorrichtung 40 weist bezogen auf einen Untergrund 50, bei dem es sich beispielsweise um die Unterkonstruktion eines Gebäudedachs handeln kann, eine Höhe auf, dass sich zwischen dem Unterblech 14 und dem Untergrund 50 ein Spalt 52 ausbildet. Der Spalt 52 weist eine Höhe auf, die ausreicht, um unterhalb der Absorber 10 Zuleitungsrohre verlegen zu können, die mit dem Einlass 20 und/oder dem Auslass 24 verbunden sein können.

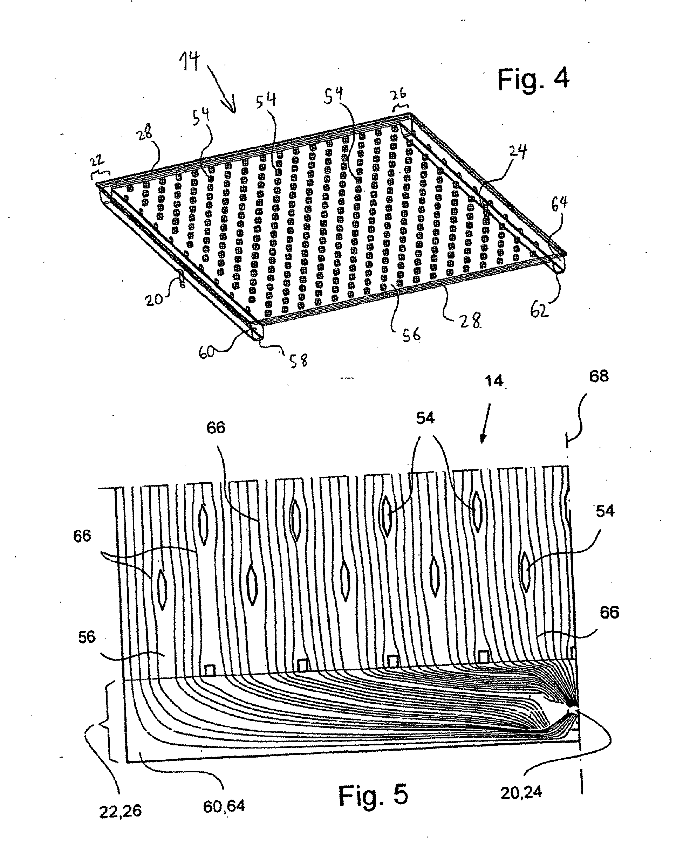

Das in Fig. 4 dargestellte erfindungsgemäße Unterblech 14 weist eine Vielzahl Leitmittel auf, die als Strömungsleitbleche 54 ausgebildet sind, wodurch das Zwischenblech 16 eingespart wird. Die Strömungsleitbleche 54 sind durch Tiefziehen aus einem Leitungsboden 56 so stark heraus geformt, dass sich Ihre dem nicht dargestellten Oberblech 12 zugewandten Oberflächen auf einer Höhe zu den Flanschflächen des Ansatzes 28 befinden. Das Oberblech 12 kann dadurch als einfache Platte ausgeformt sein, die nicht einem Umformverfahren unterzogen werden muss. Im dargestellten Ausführungsbeispiel ist der Einlass 20 in einem Einlaufbassinboden 58 eines Einlaufbassin 60 ausgeformt. Durch die Breite des Einlaufbassins 60 in Strömungsrichtung wird der Einströmbereich 22 definiert. Entsprechend ist der Auslass 24 in einem Auslaufbassinboden 62 eines Auslaufbassin 64 ausgeformt, wobei durch die Breite des Auslaufbassin 64 in Strömungsrichtung der Ausströmbereich 26 definiert ist.

Zwischen dem Einströmbereich 22 und dem Ausströmbereich 26 ergeben sich mit Hilfe der Strömungsleitbleche 54 im Wesentlichen lineare, das heißt gerade Strömungslinien 66 (Fig. 5). Die Strömungslinien 66 weichen lediglich im Bereich des Einlaufbassin 60 und des Auslaufbassin 64 von der linearen Strömungsrichtung ab. Das Unterblech 14 ist insbesondere zu einer Symmetrieachse 68 symmetrisch gestaltet.

## Patentansprüche

1. Absorber zur Wärmegewinnung aus Solarthermie, mit
einem der Sonne zugewandten Oberblech (12),
einem der Sonne abgewandten Unterblech (14) und
zwischen dem Oberblech (12) und dem Unterblech (14) ausgebildeten Leitmitteln (18, 54) zur im Wesentlichen linearen und/oder homogenen Durchleitung eines Fluids von einem Einlass (20) zu einem Auslass (24),
wobei der Einlass (20) und/oder der Auslass (24) durch das Unterblech (14) ausgebildet sind und
der Einlass (20) und/oder der Auslass (24) und/oder die Leitmittel (18, 54) durch Tiefziehen herstellbar sind,
wobei die Leitmittel (18, 54) einstückig mit dem Unterblech (14) ausgebildet sind und das Oberblech (12) an den Leitmitteln (18, 54) anliegt, wobei das Oberblech (12) als einfache gerade Platte ausgestaltet ist,
wobei das Unterblech (14) ein dem Einlass (20) zugeordnetes Einlaufbassin (60) zur Ausbildung eines Einströmbereichs (22), ein dem Auslass (24) zugeordnetes Auslaufbassin (64) zur Ausbildung eines Ausströmbereichs (26) und einen Leitungsboden (56), über den das Einlaufbassin (60) und das Auslaufbassin (64) miteinander verbunden sind, aufweist,
**dadurch gekennzeichnet, dass**
der Leitungsboden (56) einen geringeren Abstand zum Oberblech (12) aufweist als ein Einlaufbassinboden (58) des Einlaufbassins (60) und ein Auslaufbassinboden (62) des Auslaufbassins (64) und der Abstand des Leitungsbodens (56) zum Oberblech (12) ≥ 1,5 mm bis ≤ 6,0 mm, vorzugsweise ≥ 2,0 mm bis ≤ 4,0 mm und besonders bevorzugt ≥ 2,5 mm bis ≤ 3,5 mm beträgt zur Erreichung einer durchschnittliche Strömungsgeschwindigkeit des Fluids, insbesondere Wasser, im Bereich des Leitungsbodcns (56) von insbesondere ≥ 0,001 m/s bis ≤ 0,02 m/s, vorzugsweise ≥ 0,002 m/s bis ≤ 0,005 m/s und besonders bevorzugt ≥ 0,0025 m/s bis ≤0,0035 m/s,
wobei eine formschlüssige Verbindung zwischen Oberblech (12) und Unterblech (14) vorgesehen ist, wobei die Verbindung über eine hinterschnittene Rippe (32), die in einer sich im Öffnungsbereich verjüngenden Vertiefung (36) eingesetzt ist, erfolgt und die Vertiefung (36) durch entsprechend der hinterschnittenen Rippe (32) geformte Rippen (38) ausgebildet ist.

2. Absorber nach Anspruch 1 **dadurch gekennzeichnet, dass** die Leitmittel (18, 54) durch das Unterblech (14) insbesondere durch Tiefziehen ausgebildet sind.

3. Absorber nach Anspruch 1 oder 2 **dadurch gekennzeichnet, dass** mehrere in Strömungsrichtung und/oder quer zur Strömungsrichtung zueinander beabstandete Leitmittel (54) vorgesehen sind, die in Strömungsrichtung strömungstechnisch konturiert sind und insbesondere eine Länge in Strömungsrichtung aufweisen, die größer ist als eine Breite quer zur Strömungsrichtung.

4. Absorber nach einem der Ansprüche 1 bis 3 **dadurch gekennzeichnet, dass** der Absorber nur durch das Oberblech (12) und das Unterblech (14) und gegebenenfalls einem Verbindungsmittel zur Verbindung des Oberblechs (12) mit dem Unterblech (14) ausgebildet ist.

5. Absorber nach einem der Ansprüche 1 bis 4 **dadurch gekennzeichnet, dass** der Einlass (20) und/oder der Auslass (24) als Ausstülpungen des Oberblechs (12) und/oder des Unterblechs (14) ausgebildet sind.

6. Absorber nach einem der Ansprüche 1 bis 5 **dadurch gekennzeichnet, dass** das Oberblech (12) und das Unterblech (14) jeweils einen vorzugsweise umlaufenden Ansatz (28) aufweisen und das Oberblech (12) und das Unterblech (14) über den Ansatz (28) insbesondere durch Kleben oder Laserschweißen miteinander verbunden ist.

7. Absorber nach einem der Ansprüche 1 bis 6 **dadurch gekennzeichnet, dass** das in dem Unterblech (14) und/oder in dem Oberblech (12) ein durch Stanzen herstellbarer Sichtbereich vorgesehen ist, wobei der Sichtbereich durch ein im Wesentlichen transparentes Material, insbesondere Acrylglas und/oder Quarzglas geschlossen ist, wobei in dem Sichtbereich eine Solarzelle vorgesehen ist.

8. Verfahren zur Herstellung eines Absorbers (10) zur Wärmegewinnung aus Solarthermie nach einem der Ansprüche 1 bis 7, mit den Schritten:
- Bereitstellen einer ersten Platine und einer zweiten Platine, die insbesondere durch Stanzen aus einem gemeinsamen Flachband erhalten wurden,
- Tiefziehen der zweiten Platine zu einem Unterblech (14), wobei während des Tiefziehens ein Einlass (20) und ein Auslass (24) und Leitmittel (18, 54) in dem Unterblech (14) ausgebildet werden, und
- Verbinden des Oberblechs (12) mit dem Unterblech (14) zur Ausbildung des Absorbers (10).

9. Verwendung eines Absorbers (10) zur Wärmegewinnung aus Solarthermie nach einem der Ansprüche 1 bis 7, bei dem die durchschnittliche Strömungsgeschwindigkeit eines Fluids, insbesondere Wasser, zwischen dem Oberblech (12) und dem Leitungsboden (56) des Unterblechs (14) ≥ 0,001 m/s bis ≤ 0,02 m/s, vorzugsweise ≥ 0,002 m/s bis ≤ 0,005 m/s und besonders bevorzugt ≥ 0,0025 m/s bis ≤ 0,0035 m/s beträgt.

## Claims

1. An absorber for the recovery of heat from solar heating, with
an upper plate (12) facing the sun,
a lower plate (14) facing away from the sun, and
conduction means (18, 54), formed between the upper plate (12) and the lower plate (14), for the essentially linear and/or homogeneous conduction of a fluid through from an inlet (20) to an outlet (24),
the inlet (20) and/or the outlet (24) being formed by the lower plate (14), and
the inlet (20) and/or the outlet (24) and/or the conduction means (18, 54) being producible by deep drawing,
the conduction means (18, 54) being formed in one piece with the lower plate (14) and the upper plate (12) bearing on the conduction means (18, 54), wherein the upper plate (12) is formed as a simple even plate,
the lower plate (14) having an entry basin (60), assigned to the inlet (20), for forming an inflow region 22, an exit basin (64), assigned to the outlet (24), for forming an outflow region (26), and a conduction bottom (56), via which the entry basin (60) and the exit basin (64) are connected to one another,
**characterised in that**
the conduction bottom (56) comprises a shorter distance to the upper plate (12) than an entry basin bottom (58) of the entry basin (60) and an exit basin bottom (62) of the exit basin (64), and that the distance of the conduction bottom (56) to the upper plate (12) is ≥1,5 mm to ≤ 6,0 mm, preferably ≥ 2,0 mm to ≤ 4,0 mm, and most preferably ≥ 2,5 mm to ≤ 3,5 mm, for the attainability of an average flow rate of the fluid, water in particular, in the area of the conduction bottom (56) of in particular ≥ 0,001 m/s to ≤ 0,02 m/s, preferably ≥ 0,002 m/s to ≤ 0,005 m/s, and most preferably ≥ 0,0025 m/s to ≤ 0,0035 m/s,
wherein a positive connection is provided between the upper plate (12) and the lower plate (14), wherein the connection is taking place via an undercut rib (32), which is inserted in a depression (36) tapering in the opening region, and the depression (36) being formed by ribs (38) designed accordant to the undercut rib (32).

2. The absorber as claimed in claim 1, **characterised in that** the conduction means (18, 54) through the lower plate (14) are formed in particular by deep drawing.

3. The absorber as claimed in claim 1 or 2, **characterised in that** a plurality of conduction means (54) are provided which are spaced apart from one another in the flow direction and/or transversely to the flow direction, which are contoured fluidically in the flow direction and, in particular, have a length in the flow direction which is greater than a width transversely to the flow direction.

4. The absorber as claimed in one of claims 1 to 3, **characterised in that** the absorber is formed only by the upper plate (12) and the lower plate (14) and, if appropriate, a connection means for connecting the upper plate (12) to the lower plate (14).

5. The absorber as claimed in one of claims 1 to 4, **characterised in that** the inlet (20) and/or the outlet (24) are designed as protuberances of the upper plate (12) and/or of the lower plate (14).

6. The absorber as claimed in one of claims 1 to 5, **characterised in that** the upper plate (12) and the lower plate (14) each have a preferably peripheral extension (28), and that the upper plate (12) and the lower plate (14) are connected to one another via the extension (28), in particular by adhesive bonding or laser welding.

7. The absorber as claimed in one of claims 1 to 6, **characterised in that** in the lower plate (14) and/or the upper plate (12) a field of vision, producible by stamping, is provided, wherein the field of vision is closed by an in essence transparent material, preferably acrylic glass and/or silica glass, wherein a solar cell is provided in the field of vision.

8. A method for producing an absorber (10) for the recovery of heat from solar heating as claimed in one of claims 1 to 7, with the steps:
- providing a first sheet bar and a second sheet bar which have been obtained, in particular, by stamping out of one common flat strip,
- deep drawing of the second sheet bar to form a lower plate (14), during deep drawing an inlet (20) and/or an outlet (24) and/or conduction means (18, 54) being formed in the lower plate (14), and
- connecting the upper plate (12) to the lower plate (14) in order to form the absorber (10).

9. Use of an absorber (10) for the recovery of heat from solar heating as claimed in one of claims 1 to 7, whose average flow rate of a fluid, water in particular, between the upper plate (12) and the conduction bottom (56) of the lower plate (14) is ≥ 0,001 m/s to ≤ 0,02 m/s, preferably ≥ 0,002 m/s to ≤ 0,005 m/s, and most preferably ≥ 0,0025 m/s to ≤ 0,0035 m/s.

## Revendications

1. Absorbeur pour la récupération de chaleur à partir de l'héliothermie, avec
une tôle supérieure (12) tournée vers le soleil,
une tôle inférieure (14) à l'opposé du soleil et
des moyens formant conduits (18, 54) conçus entre la tôle supérieure (12) et la tôle inférieure (14) et destinés à conduire un fluide d'une entrée (20) à une sortie (24) de manière globalement linéaire et/ou homogène,
l'entrée (20) et/ou la sortie (24) étant conçues dans la tôle inférieure (14) et
l'entrée (20) et/ou la sortie (24) et/ou les moyens formant conduits (18, 54) pouvant être fabriqués par emboutissage profond,
les moyens formant conduits (18, 54) étant conçus d'un seul tenant avec la tôle inférieure (14) et la tôle supérieure (12) se trouvant contre les moyens formant conduits (18, 54), la tôle supérieure (12) étant conçue comme une simple plaque plate,
la tôle inférieure (14) comportant un bassin d'entrée (60) associé à l'entrée (20) pour la formation d'une zone d'afflux (22), un bassin de sortie (26) associé à la sortie (24) pour la formation d'une zone d'écoulement (26) et un fond de conduits (56) par l'intermédiaire duquel le bassin d'entrée (60) et le bassin de sortie (64) sont reliés entre eux,
**caractérisé en ce que**
le fond de conduits (56) est à une plus petite distance de la tôle supérieure (12) qu'un fond de bassin d'entrée (58) du bassin d'entrée (60) et qu'un fond de bassin de sortie (62) du bassin de sortie (64) et la distance du fond de conduits (56) à la tôle supérieure (12) est de 1,5 mm à 6,0 mm, de préférence de 2,0 mm à 4,0 mm et notamment de préférence de 2,5 mm à 3,5 mm afin d'atteindre une vitesse d'écoulement moyenne du fluide, notamment de l'eau, dans la zone du fond de conduits (56) notamment de 0,001 m/s à 0,02 m/s, de préférence de 0,002 m/s à 0,005 m/s et notamment de préférence de 0,0025 m/s à 0,0035 m/s,
un assemblage par concordance de forme étant prévu entre la tôle supérieure (12) et la tôle inférieure (14), l'assemblage s'effectuant par l'intermédiaire d'une nervure en contre-dépouille (32), qui est placée dans un creux (36) se rétrécissant dans la zone d'ouverture, et le creux (36) étant créé par des nervures (38) formées conformément à la nervure en contre-dépouille (32).

2. Absorbeur selon la revendication 1, **caractérisé en ce que** les moyens formant conduits (18, 54) sont conçus dans la tôle inférieure (14) notamment par emboutissage profond.

3. Absorbeur selon la revendication 1 ou 2, **caractérisé en ce qu'**il est prévu plusieurs moyens formant conduits (54) qui sont à une certaine distance les uns des autres dans le sens de l'écoulement et/ou transversalement au sens de l'écoulement (54), qui ont un contour conforme à la technique des fluides dans le sens de l'écoulement et qui ont notamment une longueur dans le sens de l'écoulement plus grande qu'une largeur transversalement au sens de l'écoulement.

4. Absorbeur selon l'une des revendications 1 à 3, **caractérisé en ce que** l'absorbeur est conçu seulement par la tôle supérieure (12) et par la tôle inférieure (14) ainsi que le cas échéant par un moyen d'assemblage destiné à assembler la tôle supérieure (12) à la tôle inférieure (14).

5. Absorbeur selon l'une des revendications 1 à 4, **caractérisé en ce que** l'entrée (20) et/ou la sortie (24) sont conçues comme des protubérances de la tôle supérieure (12) et/ou de la tôle inférieure (14).

6. Absorbeur selon l'une des revendications 1 à 5, **caractérisé en ce que** la tôle supérieure (12) et la tôle inférieure (14) ont chacune un épaulement (28) de préférence circonférentiel et **en ce que** la tôle supérieure (12) et la tôle inférieure (14) sont reliées entre elles par l'intermédiaire de l'épaulement (28) notamment par collage ou soudage au laser.

7. Absorbeur selon l'une des revendications 1 à 6, **caractérisé en ce qu'**une fenêtre pouvant être fabriquée par estampage est prévue dans la tôle inférieure (14) et/ou la tôle supérieure (12), la fenêtre étant fermée par un matériau globalement transparent, notamment du verre acrylique et/ou du verre quartzeux, une cellule solaire étant prévue dans la fenêtre.

8. Procédé pour la fabrication d'un absorbeur (10) destiné à la récupération de chaleur à partir de l'héliothermie selon l'une des revendications 1 à 7, avec les étapes suivantes :
- préparation d'une première plaque et d'une deuxième plaque qui ont été obtenues notamment par estampage à partir d'une bande plate commune,
- emboutissage profond de la deuxième plaque pour former une tôle inférieure (14), une entrée (20) et une sortie (24) ainsi que des moyens formant conduits (18, 54) étant conçus dans la tôle inférieure (14) pendant l'emboutissage profond, et
- assemblage de la tôle supérieure (12) à la tôle inférieure (14) pour former l'absorbeur (10).

9. Utilisation d'un absorbeur (10) destiné à la récupération de chaleur à partir de l'héliothermie selon l'une des revendications 1 à 7, la vitesse d'écoulement moyenne d'un fluide, notamment de l'eau, entre la tôle supérieure (12) et le fond de conduits (56) de la tôle inférieure (14) étant de 0,001 m/s à 0,02 m/s, de préférence de 0,002 m/s à 0,005 m/s et notamment de préférence de 0,0025 m/s à 0,0035 m/s.
